(19) **Europäisches Patentamt / European Patent Office / Office européen des brevets**

(11) **EP 4 414 889 A1**

(12) **EUROPEAN PATENT APPLICATION**
published in accordance with Art. 153(4) EPC

(43) Date of publication:
**14.08.2024 Bulletin 2024/33**

(21) Application number: **22882721.8**

(22) Date of filing: **12.10.2022**

(51) International Patent Classification (IPC):
**G06N 3/02** (2006.01)    **G06N 3/08** (2023.01)
**H04W 28/04** (2009.01)

(52) Cooperative Patent Classification (CPC):
**G06N 3/02; G06N 3/0464; G06N 3/08;
H04L 1/1829; H04W 28/04**

(86) International application number:
**PCT/CN2022/124889**

(87) International publication number:
**WO 2023/066111 (27.04.2023 Gazette 2023/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2021 CN 202111228413**

(71) Applicant: **Huawei Technologies Co., Ltd.
Shenzhen, Guangdong 518129 (CN)**

(72) Inventors:
• **LEE, Mengyuan**
  **Hangzhou, Zhejiang 310058 (CN)**
• **YU, Guanding**
  **Hangzhou, Zhejiang 310058 (CN)**
• **WANG, Jian**
  **Shenzhen, Guangdong 518129 (CN)**
• **LI, Rong**
  **Shenzhen, Guangdong 518129 (CN)**

(74) Representative: **Maiwald GmbH
Engineering
Elisenhof
Elisenstrasse 3
80335 München (DE)**

(54) **DATA RETRANSMISSION METHOD AND RELATED PRODUCT**

(57)    This application discloses a data retransmission method and a related product. The first distributed node receives at least one piece of first data of at least one second distributed node adjacent to the first distributed node; the first distributed node determines that an inference result is not robust when performing inference based on second data of the first distributed node and the at least one piece of first data by using a graph neural network model; the first distributed node determines at least one third distributed node on which an error occurs in transmission; the first distributed node sends a retransmission request to the at least one third distributed node; and the first distributed node performs inference again based on the second data, the at least one piece of first data, and the at least one piece of retransmitted first data by using the graph neural network model. With an aim of robustness of a distributed inference result, an appropriate retransmission mechanism is formulated, so that a robust distributed inference result can be obtained with a small quantity of retransmissions.

First distributed node 101 — At least one second distributed node 102

S601: At least one piece of first data

S602: When performing inference based on second data of the first distributed node and the at least one piece of first data by using a graph neural network model, determine that an inference result is not robust

S603: Determine at least one third distributed node on which an error occurs in transmission

S604: Retransmission request

S605: Retransmit the at least one piece of first data

S606: Perform inference again based on the second data, the at least one piece of first data, and the at least one piece of retransmitted first data by using the graph neural network model

FIG. 6

## Description

This application claims priority to Chinese Patent Application No. 202111228413.1, filed with the China National Intellectual Property Administration on October 21, 2021 and entitled "DATA RETRANSMISSION METHOD AND RELATED PRODUCT", which is incorporated herein by reference in its entirety.

## TECHNICAL FIELD

This application relates to the field of communication technologies, and in particular, to a data retransmission method and a related product.

## BACKGROUND

With further improvement of network computing capabilities and explosive growth of big data, one of important methods to break through the bottleneck of conventional wireless technologies is to introduce the artificial intelligence (artificial intelligence, AI) technology into wireless network design. Conventional AI technologies have achieved great success in extracting features of Euclidean spatial data, but actually, a large amount of data in wireless systems is generated from non-Euclidean space. However, performance of the conventional AI technologies in processing non-European spatial data is yet not satisfactory. In order to extend AI technology to graph data in the non-Euclidean space, with reference to ideas of a convolutional network, a recurrent network, and a deep autoencoder, a neural network that can process the graph data, namely a graph neural network (graph neural network, GNN), has been proposed and gained high attention.

A goal of the GNN is to map high-dimensional graph data to low-dimensional vector space. Through a multi-layer graph convolution operation, a node can continuously aggregate neighbor information based on a topology structure, and update a status of the node. During distributed inference, information exchange between neighbors needs to be completed through wireless communication. Due to impact of a path loss, a shadow, fading, and noise of a wireless channel, a signal may not be transmitted correctly, which affects inference performance. An existing retransmission mechanism aims to improve a throughput of a system. However, distributed inference is tolerant to a transmission error to some extent. If the existing retransmission mechanism is used, communication resources may be wasted, and a system delay may be increased. Therefore, a retransmission mechanism oriented to distributed inference is urgently needed to improve robustness of distributed inference.

## SUMMARY

This application provides a data retransmission method and a related product. With an aim of robustness of a distributed inference result, an appropriate retransmission mechanism is formulated, so that a robust distributed inference result is obtained with a small quantity of retransmissions.

According to a first aspect, a data retransmission method is provided, applied to a distributed learning system based on a graph neural network, where the distributed learning system includes at least two distributed nodes, the at least two distributed nodes include a first distributed node and at least one second distributed node, and the method includes: The first distributed node receives at least one piece of first data of the at least one second distributed node adjacent to the first distributed node. The first distributed node performs inference based on second data of the first distributed node and the at least one piece of first data by using a graph neural network model, and determines that an inference result is not robust. The first distributed node determines at least one third distributed node on which an error occurs in transmission, where the at least one third distributed node belongs to the at least one second distributed node. The first distributed node sends a retransmission request to the at least one third distributed node, where the retransmission request is used to request the at least one third distributed node to retransmit the at least one piece of first data. The first distributed node performs inference again based on the second data, the at least one piece of first data, and the at least one piece of retransmitted first data by using the graph neural network model.

In a possible implementation, that the first distributed node determines that an inference result is not robust when performing inference based on second data of the first distributed node and the at least one piece of first data by using a graph neural network model includes: The first distributed node determines that a robust probability is less than a specified target robust probability, where the robust probability is a probability that each quantity of error bits during transmission of the at least one piece of first data is less than a maximum quantity of error bits, the maximum quantity of error bits is a greatest value in all possible first quantities of error bits, the first quantity of error bits is a maximum quantity of bits that are allowed to be erroneous when an inference deviation is less than a first maximum inference deviation during transmission of the at least one piece of first data over a communication link, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. That the first distributed node determines at least one third distributed node on which an error occurs in transmission includes: The first distributed node determines the at least one third distributed node on which a bit error rate of the at least one piece of first data is greater than a target bit error rate, where the target bit error rate is a bit error rate that is capable of ensuring that a quantity of error bits during transmission of the at least one piece of first data over the communication link is less than or equal to the maximum quantity of error bits.

In another possible implementation, that the first distributed node determines that an inference result is not robust when performing inference based on second data of the first distributed node and the at least one piece of first data by using a graph neural network model includes: The first distributed node determines that a bit error rate of the at least one third distributed node is greater than a target bit error rate, where the target bit error rate is a bit error rate that is capable of ensuring that a quantity of error bits during transmission of the at least one piece of first data over the communication link is less than or equal to a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. That the first distributed node determines at least one third distributed node on which an error occurs in transmission includes: The first distributed node determines the at least one third distributed node on which a bit error rate of the at least one piece of first data is greater than the target bit error rate.

In still another possible implementation, that the first distributed node determines that an inference result is not robust when performing inference based on second data of the first distributed node and the at least one piece of first data by using a graph neural network model includes: The first distributed node determines that a second maximum inference deviation is greater than a specified inference deviation, where the second maximum inference deviation is a largest value in all possible inference deviations, the inference deviation is a quantity of different bits between a first inference result obtained when the first distributed node performs inference based on the first data and the at least one piece of first data by using the graph neural network model and a third inference result obtained when the first distributed node performs inference based on the first data and at least one piece of fourth data by using the graph neural network model, and the at least one piece of fourth data is data whose dimension is the same as that of the at least one piece of first data and whose element values are all opposite to the at least one piece of first data. That the first distributed node determines at least one third distributed node on which an error occurs in transmission includes: The first distributed node determines the at least one third distributed node that has an outage.

According to a second aspect, a data retransmission method is provided, applied to a distributed learning system based on a graph neural network, where the distributed learning system includes at least two distributed nodes, the at least two distributed nodes include a first distributed node and at least one second distributed node, and the method includes: Any second distributed node in the at least one second distributed node sends first data to the first distributed node. The any second distributed node receives a retransmission request of the first distributed node when an inference result of the first distributed node is not robust because an error occurs in transmission performed by the any second distributed node, where the retransmission request is used to request the any second distributed node to retransmit the first data. The any second distributed node retransmits the first data to the first distributed node.

According to a third aspect, a first distributed node is provided, used in a distributed learning system based on a graph neural network, where the distributed learning system includes at least two distributed nodes, and the at least two distributed nodes include the first distributed node and at least one second distributed node. The first distributed node may implement the data retransmission method in the first aspect. For example, the first distributed node may be a chip or a device. The foregoing method may be implemented by software, hardware, or hardware executing corresponding software.

In a possible implementation, the first distributed node includes a transceiver unit and a processing unit. The transceiver unit is configured to receive at least one piece of first data of the at least one second distributed node adjacent to the first distributed node. The processing unit is configured to perform inference based on second data of the first distributed node and the at least one piece of first data by using a graph neural network model, and determine that an inference result is not robust. The processing unit is further configured to determine at least one third distributed node on which an error occurs in transmission, where the at least one third distributed node belongs to the at least one second distributed node. The transceiver unit is further configured to send a retransmission request to the at least one third distributed node, where the retransmission request is used to request the at least one third distributed node to retransmit the at least one piece of first data. The processing unit is further configured to perform inference again based on the second data, the at least one piece of first data, and the at least one piece of retransmitted first data by using the graph neural network model.

Optionally, the processing unit is configured to determine that a robust probability is less than a specified target robust probability, where the robust probability is a probability that each quantity of error bits during transmission of the at least one piece of first data is less than a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. The processing unit is further configured to determine the at least one third distributed node on which a bit error rate of the at least one piece of first data is greater than a target bit error rate, where the target bit error rate is a bit error rate that is capable of ensuring that a quantity of error bits is less than or equal to the maximum quantity of error bits during transmission of the at least one piece of first data over the communication link.

Optionally, the processing unit is configured to determine that a bit error rate of the at least one third distributed node is greater than a target bit error rate, where the target bit error rate is a bit error rate that is capable of ensuring that a quantity of error bits during transmission of the at least one piece of first data over the communication link is less than or equal to a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. The processing unit is further configured to determine the at least one third distributed node on which a bit error rate of the at least one piece of first data is greater than the target bit error rate.

Optionally, the processing unit is configured to determine that a second maximum inference deviation is greater than a specified inference deviation, where the second maximum inference deviation is a largest value in all possible inference deviations, the inference deviation is a quantity of different bits between a first inference result obtained when the first distributed node performs inference based on the first data and the at least one piece of first data by using the graph neural network model and a third inference result obtained when the first distributed node performs inference based on the first data and at least one piece of fourth data by using the graph neural network model, and the at least one piece of fourth data is data whose dimension is the same as that of the at least one piece of first data and whose element values are all opposite to the at least one piece of first data. The processing unit is further configured to determine the at least one third distributed node has an outage.

In another possible implementation, the first distributed node is configured to perform the method in the first aspect and the possible implementations of the first aspect.

In still another possible implementation, the first distributed node in the third aspect includes a processor coupled to a memory, and the processor is configured to support the apparatus in performing a corresponding function in the foregoing communication method. The memory is configured to be coupled to the processor, and the memory stores a computer program (or computer-executable instructions) and/or data necessary for the apparatus. Optionally, the first distributed node may further include a communication interface, configured to support communication between the apparatus and another network element, for example, data and/or signal sending or receiving. For example, the communication interface may be a transceiver, a circuit, a bus, a module, or a communication interface of another type. Optionally, the memory may be located in the first distributed node and integrated with the processor, or may be located outside the first distributed node.

In yet another possible implementation, the first distributed node in the third aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from a first distributed node other than the first distributed node and transmit the signal to the processor, or send a signal from the processor to a first distributed node other than the first distributed node. When the first distributed node is the chip, the transceiver apparatus is the transceiver circuit or the input/output interface.

When the first distributed node in the third aspect is the chip, a sending unit may be an output unit, for example, an output circuit or a communication interface; and a receiving unit may be an input unit, for example, an input circuit or a communication interface. When the first distributed node is a terminal, the sending unit may be a transmitter or a transmitting machine, and the receiving unit may be a receiver or a receiving machine.

According to a fourth aspect, a second distributed node is provided, used in a distributed learning system based on a graph neural network, where the distributed learning system includes at least two distributed nodes, and the at least two distributed nodes include a first distributed node and at least one second distributed node. The second distributed node is any second distributed node in the at least one second distributed node. The second distributed node may implement the data retransmission method in the second aspect. For example, the second distributed node may be a chip or a device. The foregoing method may be implemented by software, hardware, or hardware executing corresponding software.

In a possible implementation, the second distributed node includes a transceiver unit. The transceiver unit is configured to send first data to the first distributed node. The transceiver unit is further configured to receive a retransmission request of the first distributed node when an inference result of the first distributed node is not robust because an error occurs in transmission, where the retransmission request is used to request the second distributed node to retransmit the first data. The transceiver unit is further configured to retransmit the first data to the first distributed node.

In another possible implementation, the second distributed node is configured to perform the method in the second aspect.

In still another possible implementation, the second distributed node in the fourth aspect includes a processor coupled to a memory, and the processor is configured to support the apparatus in performing a corresponding function in the foregoing communication method. The memory is configured to be coupled to the processor, and the memory stores a computer program (or computer-executable instructions) and/or data necessary for the apparatus. Optionally, the second distributed node may further include a communication interface, configured to support communication between the apparatus and another network element, for example, data and/or signal sending or receiving. For example, the communication interface may be a transceiver, a circuit, a bus, a module, or a communication interface of another type. Optionally, the memory may be located in the second distributed node and integrated with the processor, or may be located outside the second distributed node.

In yet another possible implementation, the second distributed node in the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from a second distributed node other than the second distributed node and transmit the signal to the processor, or send a signal from the processor to a second distributed node other than the second distributed node. When the second distributed node is the chip, the transceiver apparatus is the transceiver circuit or the input/output interface.

When the second distributed node in the fourth aspect is the chip, a sending unit may be an output unit, for example, an output circuit or a communication interface; and a receiving unit may be an input unit, for example, an input circuit or a communication interface. When the second distributed node is a terminal, the sending unit may be a transmitter or a transmitting machine, and the receiving unit may be a receiver or a receiving machine.

According to a fifth aspect, a first distributed node is provided, including a processor, where the processor is configured to: be coupled to a memory, read instructions in the memory, and implement the method in any one of the first aspect or the implementations of the first aspect according to the instructions.

According to a sixth aspect, a second distributed node is provided, including a processor, where the processor is configured to: be coupled to a memory, read instructions in the memory, and implement the method in the second aspect according to the instructions.

According to a seventh aspect, a distributed learning system is provided, where the distributed learning system includes at least two distributed nodes, and the at least two distributed nodes include the first distributed node in the third aspect and at least one of the second distributed nodes in the fourth aspect.

According to an eighth aspect, a computer-readable storage medium is provided, where the computer-readable storage medium stores a computer program, and when the program is executed by a processor, the methods in the foregoing aspects are implemented.

According to a ninth aspect, a computer program product is provided, and is configured to: when the computer program product is executed on a computing device, perform the methods in the foregoing aspects.

## BRIEF DESCRIPTION OF DRAWINGS

FIG. 1 is a schematic diagram of a distributed learning system based on a graph neural network according to this application;

FIG. 2 is an example schematic diagram of a structure of a specific distributed learning system;

FIG. 3 is a schematic diagram of a hierarchical structure of a graph neural network according to this application;

FIG. 4 is a schematic diagram based on a wireless communication system according to an embodiment of this application;

FIG. 5 is an example schematic flowchart of automatic repeat request;

FIG. 6 is a schematic flowchart of a data retransmission method according to an embodiment of this application;

FIG. 7 is a schematic flowchart of solving a robustness determining problem according to an embodiment of this application;

FIG. 8 is a schematic flowchart of another data retransmission method according to an embodiment of this application;

FIG. 9 is a schematic flowchart of still another data retransmission method according to an embodiment of this application;

FIG. 10 is a schematic diagram of a simulation result according to an embodiment of this application;

FIG. 11 is a schematic diagram of a structure of a first distributed node according to an embodiment of this application;

FIG. 12 is a schematic diagram of a structure of a second distributed node according to an embodiment of this application;

FIG. 13 is a schematic diagram of a structure of another first distributed node according to an embodiment of this application; and

FIG. 14 is a schematic diagram of a structure of another second distributed node according to an embodiment of this application.

## DESCRIPTION OF EMBODIMENTS

The following describes embodiments of this application with reference to the accompanying drawings in embodiments of this application.

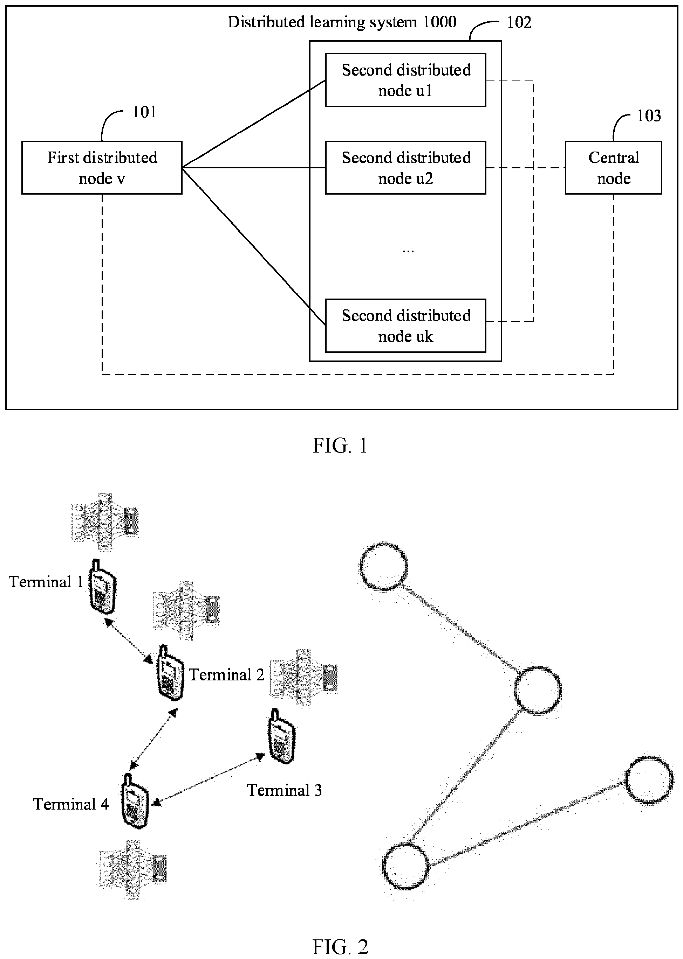

FIG. 1 is a schematic diagram of a distributed learning system based on a graph neural network according to this application. The distributed learning system 1000 includes at least two distributed nodes. The at least two distributed nodes include a first distributed node 101 (which may be referred to as a target node v) and at least one second distributed node 102 (second distributed nodes u1 to uk shown in the figure, which may be referred to as neighboring nodes (neighbors for short) of the target node v) adjacent to the first distributed node 101. The first distributed node 101 and the at least one second distributed node 102 may communicate with each other, and may be used in a wireless communication system like a mobile communication system, a satellite communication system, or a wireless sensor network. For example, the wireless communication system mentioned in this application includes but is not limited to a narrowband internet of things (narrow band-internet of things, NB-IoT) system, a long term evolution (long term evolution, LTE) system, three application scenarios (enhanced mobile broadband (enhanced mobile broadband, eMBB), high-reliable and low-latency communications (ultra-reliable and low latency communications, URLLC), and massive machine type communication (massive machine type communication, mMTC)) of a 5th generation (5th generation, 5G) mobile communication system, and a next generation mobile communication system.

The distributed learning system 1000 may further include a central node 103. The first distributed node 101 and the at least one second distributed node 102 may be connected to the central node 103. The first distributed node 101 and the at least one second distributed node 102 may directly communicate with each other, or signaling/data between the first distributed node 101 and the at least one second distributed node 102 may be forwarded by the central node 103.

The first distributed node/the second distributed node may be an access network device, or may be various types of terminals. FIG. 2 is an example schematic diagram of a structure of a specific distributed learning system. In the distributed learning system, both the first distributed node and the second distributed node are terminals. The terminal has a distributed learning capability. The specific distributed learning system on the left of FIG. 2 may be represented as a schematic diagram of the distributed learning system on the right of FIG. 2.

The access network device may be any node that has a wireless transceiver function. The access network device includes but is not limited to a NodeB NodeB, an evolved NodeB eNodeB, a base station in a fifth generation communication system, a base station or a network node in a future communication system, an access node in a Wi-Fi system, a wireless relay node, and a wireless backhaul node. Alternatively, the access network device may be a radio controller in a cloud radio access network (cloud radio access network, CRAN) scenario. Alternatively, the access network device may be a small cell, a transmission reference node (transmission reference point, TRP), a transmitting point (transmitting point, TP), a mobile switching center, a device that has a base station function in device-to-device (Device-to-Device, D2D), vehicle-to-everything (vehicle-to-everything, V2X), or machine-to-machine (machine, M2M) communication, and the like. A specific technology and a specific node form that are used by the network node are not limited in embodiments of this application.

The terminal is a node having a wireless transceiver function. The terminal may be deployed on land, including an indoor or outdoor device, a handheld device, a wearable device, or vehicle-mounted device; may be deployed on the water, for example, on a ship; or may be deployed in the air, for example, on an aircraft, an uncrewed aerial vehicle, a balloon, and a satellite. The terminal may be a mobile phone (mobile phone), a tablet computer (pad), a computer with a wireless transceiver function, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), and the like. An application scenario is not limited in embodiments of this application. Sometimes, the terminal is also referred to as user equipment (user equipment, UE), an access terminal device, a UE unit, a mobile station, a remote station, a remote terminal device, a mobile device, a wireless communication device, a UE agent, a UE apparatus, or the like.

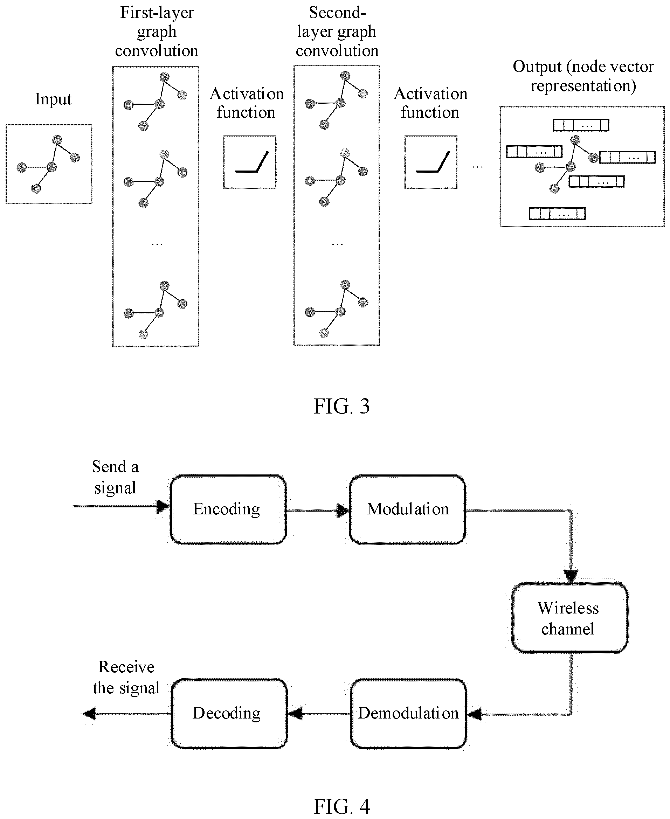

A principle of the GNN is as follows: A goal of the GNN is to map high-dimensional graph data to low-dimensional vector space. As shown in FIG. 3, the GNN still retains a hierarchical structure. Specifically, the GNN uses graph data G(V, E) as an input, and outputs a p-dimensional vector representation $\mu \in \mathbb{R}^p$ of a graph, a node, an edge, or a subgraph. V is a vertex set of the GNN, and E is an edge set of the GNN. In each layer, a most important operation is a graph convolution operation. Similar to a conventional convolution operation, the graph convolution operation is essentially a process of aggregating neighbor information, that is,

$$\mu_v^{(k)} = \mathrm{Agg}^{(k)}(\mathbf{x}_v, \mu_{N(v)}^{(k-1)}; \theta)$$

k represents $k^{th}$ layer convolution, $\mathbf{x}_v$ represents a feature of a current node v, $\mu_{N(v)}^{(k-1)}$ represents an output of a neighbor of the current node v at an upper layer, $\mathrm{Agg}^{(k)}(\cdot,\cdot; \theta)$ represents an aggregation function of the $k^{th}$ layer, and is shared by all nodes, and $\theta$ is a parameter to be trained. Through a multi-layer graph convolution operation, a node can continuously aggregate neighbor information based on a topology structure, and update a status of the node. The foregoing operation may be performed in a distributed manner. To be specific, only information exchange between neighbors is required, and no support of a central server is required. In conclusion, the GNN is one of important technologies for implementing distributed learning in wireless networks.

The first distributed node/the second distributed node may collect a data sample by using a data collection module of the first distributed node/the second distributed node, and the collected sample is used to train a machine learning model to complete a given machine learning task. To complete the foregoing machine learning task, the first distributed node and the at least one second distributed node may need to exchange information. Exchanged content may include at least one of the following: data samples collected by the distributed nodes, an intermediate local inference result, and a final local inference result. The information exchange needs to be completed through wireless communication. Therefore, performance of wireless communication affects a completion status of the machine learning task.

During distributed inference, information exchange between neighbors needs to be completed through wireless communication. Generally, a block diagram of a wireless communication system is shown in FIG. 4. To be specific, to-be-sent data is coded (including source coding and channel coding) and modulated to obtain a modulation symbol for sending.

Due to impact of a path loss, a shadow, fading, and noise of a wireless channel, a signal may not be transmitted correctly, which affects robustness of the inference results. However, an existing wireless transmission mechanism, for example, a retransmission mechanism, a power control mechanism, an adaptive modulation and coding (adaptive modulation and coding, AMC) mechanism, or the like, aims to improve a throughput of the system rather than performance of distributed inference. Therefore, a wireless transmission mechanism oriented to distributed inference is urgently needed to improve robustness of distributed inference.

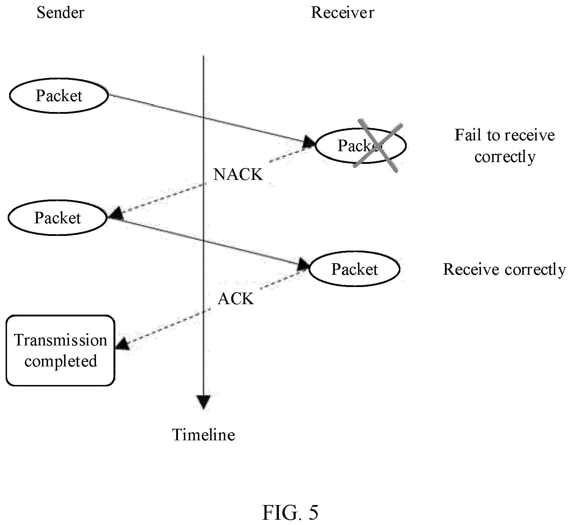

FIG. 5 is an example schematic flowchart of automatic repeat request (automatic repeat request, ARQ). An ARQ technology can ensure transmission reliability. Specifically, when a receiver successfully receives transmitted information, the receiver feeds back an acknowledgement (acknowledgement, ACK) signal to a sender. Otherwise, the receiver sends a non-acknowledgment (non-acknowledgement, NACK) signal to the sender, and the sender retransmits the information until the ACK signal is received or a maximum quantity of retransmissions is reached.

However, in this technology, transmission reliability is used as a retransmission determining criterion. However, in a distributed learning system, a task of the system is to ensure robustness of an inference result, and is tolerant to a transmission error to some extent (that is, an error does not affect an inference result of the distributed learning system to some extent). In this case, when retransmission is performed by using the retransmission technology, communication resources are wasted, and a system delay is increased.

In view of this, this application provides a data retransmission solution. With an aim of robustness of a distributed inference result, an appropriate retransmission mechanism is formulated, so that a robust distributed inference result can be obtained with a small quantity of retransmissions.

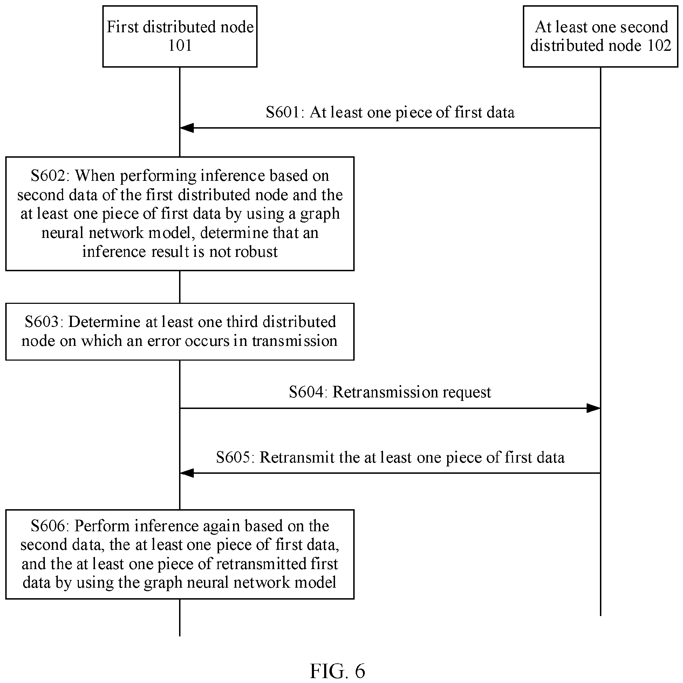

FIG. 6 is a schematic flowchart of a data retransmission method according to an embodiment of this application. The method is applied to a distributed learning system based on a graph neural network. The distributed learning system includes at least two distributed nodes, and the at least two distributed nodes include a first distributed node and at least one second distributed node. The method may include the following steps:

S601: The at least one second distributed node adjacent to the first distributed node sends at least one piece of first data of the at least one second distributed node to the first distributed node.

Correspondingly, the first distributed node receives the at least one piece of first data of the at least one second distributed node adjacent to the first distributed node.

The first distributed node is a target node, and may be the first distributed node 101 in the distributed learning system shown in FIG. 1. The at least one second distributed node may be the at least one second distributed node 102 in the distributed learning system shown in FIG. 1. The first distributed node 101 is adjacent to the at least one second distributed node 102. The at least one second distributed node 102 is also referred to as a neighboring node of the first distributed node.

The first distributed node 101 may obtain second data. The second data may be at least one of the following: a data sample collected by the first distributed node 101 by using a data collection module of the first distributed node 101, an intermediate local inference result, or a final local inference result. The second data is used for an inference task of a machine learning model. To complete inference of the machine learning model, the first distributed node 101 may need to exchange information with the at least one adjacent second distributed node 102. Exchanged content may include at least one of the following: a data sample collected by the at least one second distributed node 102, an intermediate local inference result, and a final local inference result.

The at least one second distributed node 102 separately transmits the first data of the at least one second distributed node 102 to the first distributed node 101. The first distributed node 101 receives the at least one piece of first data transmitted by the at least one second distributed node 102. The at least one piece of first data includes at least one of the following: the data sample collected by the at least one second distributed node 102, the intermediate local inference result, and the final local inference result.

For example, the at least one piece of first data may be understood as initial data transmitted by the at least one second distributed node 102 to the first distributed node 101.

S602: When performing inference based on the second data of the first distributed node and the at least one piece of first data by using a graph neural network model, the first distributed node determines that an inference result is not robust.

After receiving the at least one piece of first data, the first distributed node 101 inputs the second data of the first distributed node 101 and the at least one piece of received first data into the distributed learning model based on the GNN for inference. Because information exchange between the first distributed node 101 and the at least one adjacent second distributed node 102 needs to be completed through wireless communication, performance of wireless communication affects a completion status of a machine learning task. When performing inference based on the second data of the first distributed node 101 and the at least one piece of first data by using the GNN model, the first distributed node 101 determines that the inference result is not robust.

The system shown in FIG. 3 may be constructed into a graph G(V, E). Elements in the vertex set V and the edge set E correspond to distributed nodes and communication channels respectively. In a training phase, training data of each distributed node has a label $c_v$, and the label may be continuous or discrete. The machine learning task is to process data by using the machine learning model, so that an obtained processing result is the same as the data label

$c_v$. Each distributed node locally stores a p-dimensional feature $\mathbf{x}_v \in \{0,1\}^p$ related to the problem. The feature is usually stored in a form of a binary vector, to facilitate subsequent transmission. If an original feature is continuous, a binary form of the original feature may be obtained through quantization. For different machine learning tasks, $\mathbf{x}_v$ and $c_v$ may have different physical meanings. For example, for an image classification task, $\mathbf{x}_v$ may be image data, and $c_v$ is a category corresponding to image content. For a power control task of a communication system, $\mathbf{x}_v$ may be information like a channel state, interference information, and a power upper limit, and $c_v$ corresponds to an optimal power control decision. For a link control problem of a communication system, $\mathbf{x}_v$ may be a node weight, interference information, a quality of service (quality of service, QoS) requirement, and the like, and $c_v$ corresponds to a link activation indication. Machine learning adjusts parameters of the machine learning model through training, to solve the following problems:

$$\min/\max F(\{c_v\}_{v \in V}, \{\mathbf{x}_v\}_{v \in V}),$$

$$\text{s.t. } G(\{c_v\}_{v \in V}, \{\mathbf{x}_v\}_{v \in V})$$

$F(\cdot, \cdot)$ is a system optimization objective (which needs to be maximized or minimized), including but not limited to a system throughput, a system delay, and system energy consumption. $G(\cdot, \cdot)$ is a system optimization restriction, including but not limited to a power restriction, a QoS requirement, a fairness requirement, and a channel resource restriction. The foregoing problem may be resolved through distributed learning, that is, a relationship between $\{\mathbf{x}_v\}_{v \in V}$ and $\{c_v\}_{v \in V}$ is fitted by using a distributed machine learning model (which may be implemented by using a neural network). After the model is trained, each distributed node stores the model locally. When a distributed node v needs to infer a label corresponding to the distributed node v, the distributed node sends a transmission request to all distributed nodes uEN(v) adjacent to the distributed node, where N(v) is a set of distributed nodes adjacent to the distributed node v. After receiving the transmission request, the adjacent distributed node sends a feature of the adjacent distributed node to the target distributed node. After receiving signals of all the adjacent distributed nodes, the target distributed node v uses the local feature $\mathbf{x}_v$ and the received neighbor feature $\hat{\mathbf{H}}_v = \{\hat{\mathbf{X}}_u\}_{u \in N(v)}$ as inputs, and runs the locally stored machine learning model to obtain an inference result $\hat{C}_v$.

Training of the machine learning model usually requires a large amount of time, computing power, and energy consumption overheads, and model output accuracy in a training phase is low. Therefore, a more appropriate use manner is to train the machine learning model offline, deploy the machine learning model in an actual system, and then perform online inference. During online inference, the system can obtain only data required by an input into the machine learning model, but cannot obtain labels corresponding to the data.

The label of the data cannot be obtained in an inference phase. Therefore, robustness of model inference needs to be defined when there is no label.

To define robustness, if a quantity of error bits on a communication link between the target node v and a neighboring node u is denoted as $q_{vu}$, a vector of a quantity of error bits on communication links between the target node v and all neighboring nodes of the target node v is $\mathbf{q}_v = [q_{vu1}, q_{vu2}, ..., q_{vuK}]$, where $u_1, u_2, ..., u_K \in N(v)$, and N(v) represents a set of all the neighboring nodes of the target node v. It is assumed that $\mathbf{q}_v$ is known, a maximum inference deviation $z(\mathbf{q}_v, \hat{\mathbf{H}}_v)$ is defined as:

$$z(\mathbf{q}_v, \hat{\mathbf{H}}_v) = \max_{\tilde{\mathbf{H}}_v} \text{Dis}(\hat{c}_v - \text{GNN}(\tilde{\mathbf{H}}_v))$$

$$\text{s.t. } \left\| \tilde{\mathbf{H}}_v[u,:] - \hat{\mathbf{H}}_v[u,:] \right\|_0 \leq q_{vu}, \qquad \forall u \in N(v),$$

$$\tilde{\mathbf{H}}_v[u,j] \in \{0,1\}, \qquad \forall u \in N(v), j = 1,2,...,p$$

$\tilde{\mathbf{H}}_v$ is a variable to be optimized, that is, a target function is maximized by adjusting a value of $\tilde{\mathbf{H}}_v$; $\mathbf{q}_v = [q_{vu}, u \in N(v)]$, where $q_{vu}$ represents a quantity of error bits that may occur in a signal received by the target node v from the neighboring node u; and $\text{Dis}(\cdot, \cdot)$ defines a difference between two inference results. The following explains physical meanings of the foregoing definitions. $\hat{\mathbf{H}}_v[u,:]$ is an information vector (or matrix) of the neighboring node u in a neighbor information matrix, and an element of $\hat{\mathbf{H}}_v[u,:]$ is 0/1 bits. $\tilde{\mathbf{H}}_v[u,:]$ is a vector (or matrix) that has a same dimension as $\hat{\mathbf{H}}_v[u,:]$, and an element of $\tilde{\mathbf{H}}_v[u,:]$ is also 0/1 bits. The first restriction indicates that a quantity of different bits between

$\tilde{\mathbf{H}}_V[u,:]$ and $\hat{\mathbf{H}}_V[u,:]$ is less than $q_{vu}$, that is, $\tilde{\mathbf{H}}_V[u,:]$ is obtained by introducing a quantity of errors that is less than $q_{vu}$ bits on the basis of $\hat{\mathbf{H}}_V[u,:]$. Similarly, for other neighboring nodes, corresponding $\tilde{\mathbf{H}}_V[u,:]$ may also be constructed, and $\tilde{\mathbf{H}}_V[u,:]$ of all neighboring nodes are combined to obtain $\tilde{\mathbf{H}}_V$. $\tilde{\mathbf{H}}_V$ is input into the machine learning model to obtain an inference result $GNN(\tilde{\mathbf{H}}_V)$, and $Dis(\hat{c}_V - GNN(\tilde{\mathbf{H}}_V))$ represents a difference between the calculated inference result and an inference result (that is, $\hat{c}_V$) obtained by using $\hat{\mathbf{H}}_V$ as an input into the learning model. The optimization problem is to traverse all possible $\tilde{\mathbf{H}}_V$, and use $\tilde{\mathbf{H}}_V$ as the inputs of the machine learning model to obtain a maximum difference between the inference result and $\hat{c}_V$. In other words, $z(\mathbf{q}_V, \hat{\mathbf{H}}_V)$ defines a maximum deviation between the inference results when a quantity of error bits on communication links between all the neighboring nodes and the target node is within $\mathbf{q}_V$. When the deviation $z(\mathbf{q}_V, \hat{\mathbf{H}}_V)$ is less than a specified inference deviation $D^{max}$, the distributed inference result $\hat{c}_V$ is considered robust under the error limit $\mathbf{q}_V$. To be specific, if $z(\mathbf{q}_V, \hat{\mathbf{H}}_V)$ is less than the specified inference deviation $D^{max}$, it indicates that regardless of which bits are erroneous in an output process, the inference result is not affected. Therefore, in this case, the inference is robust. It should be noted that in a robustness determining process herein, an actual label corresponding to the input data of the learning model does not need to be obtained, and the actual label usually cannot be obtained in the inference phase. Therefore, the method in this embodiment is more feasible.

For example, it is assumed that no error occurs in transmission, the actual neighbor information matrix is $\mathbf{H}_V$; the actually received neighbor information matrix after channel transmission is $\hat{\mathbf{H}}_V = [111]$; and

$$q_{vu}=1.$$

In this case, there are possible cases of $\tilde{\mathbf{H}}_V$:

$$\tilde{\mathbf{H}}_V = [111]$$

$$\tilde{\mathbf{H}}_V = [110]$$

$$\tilde{\mathbf{H}}_V = [101]$$

$$\tilde{\mathbf{H}}_V = [011]$$

Then, differences between $\hat{c}_V$ and inference results $GNN(\tilde{\mathbf{H}}_V)$ corresponding to the foregoing possible $\tilde{\mathbf{H}}_V$ are obtained, and a maximum value in the differences is obtained. If the maximum value in the differences is less than the specified inference deviation $D^{max}$, it indicates that a bit error during transmission does not affect the inference result, and in this case, the inference is robust.

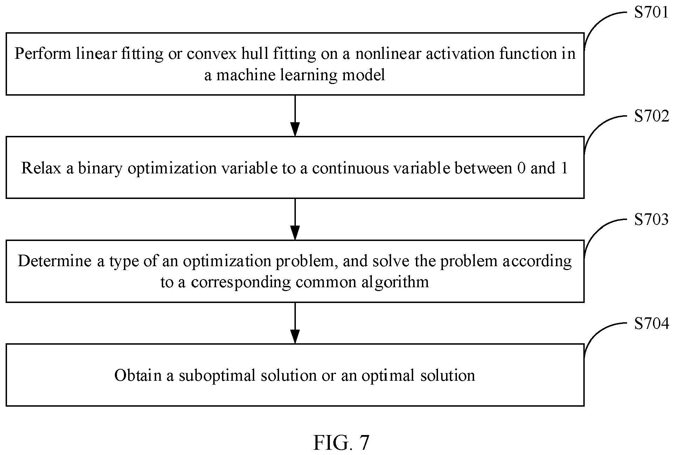

Because the machine learning model may include a non-linear operation (for example, non-linear activation in a neural network), a procedure shown in FIG. 7 may be used to solve the foregoing problem to obtain $z(\mathbf{q}_V, \hat{\mathbf{H}}_V)$, and the procedure includes the following steps.

S701: Perform linear fitting or convex hull fitting on a nonlinear activation function in the machine learning model.

S702: Relax a binary optimization variable to a continuous variable between 0 and 1.

S703: Solve the problem according to a corresponding common algorithm, where the problem becomes a linear programming problem, a convex optimization problem, or another optimization problem after the foregoing two steps of relaxation and fitting.

S704: Obtain a suboptimal solution or an optimal solution.

In this embodiment, two communication systems are mainly considered.

(1) Outage system: When quality (for example, signal-noise ratio (signal-noise ratio, SNR)) of a communication link is poor, there is a decoding failure at a receive end, and the receive end discards all bits in a data packet. In this case, an outage occurs.

(2) Non-outage system: A bit on a communication link is erroneous at a specific probability (bit error rate (bit error rate, BER)), and a BER on a communication link from the node u to the node v is calculated as follows:

$$\epsilon_{vu} = Q\left(\sqrt{\frac{2P_u h_{vu}}{\sigma_N^2}}\right)$$

$Q(.)$ is a Q function, $P_u$ is a transmit power of the node u, $h_{vu}$ is a channel gain from the node u to the node v, and $\sigma_N^2$ is a noise power.

In the outage system, the target node v may calculate an SNR of a signal sent by the neighboring node u, and determine whether an outage occurs (whether the SNR is smaller than a demodulation threshold SNR). If an outage occurs, $q_{vu} = p$, that is, all of p bits are lost. If no outage occurs, $q_{vu} = 0$. The foregoing determining of whether an outage occurs is performed on each neighboring node of the target node v, so that a vector $\mathbf{q}_v$ of a quantity of error bits may be obtained, and then $z(\mathbf{q}_v, \hat{\mathbf{H}}_v)$ is calculated and whether $z(\mathbf{q}_v, \hat{\mathbf{H}}_v)$ is less than $D^{max}$ is determined. Therefore, in the outage system, the following method can be used to determine whether the inference is robust.

A quantity of error bits transmitted from the neighbor nodes to the target node is obtained, the maximum inference deviation $z(\mathbf{q}_v', \hat{\mathbf{H}}_v)$ is calculated, and the maximum inference deviation $z(\mathbf{q}_v', \hat{\mathbf{H}}_v)$ is compared with the specified inference deviation $D^{max}$. When determining that the maximum inference deviation is greater than the specified inference deviation, the target node v determines that the inference result is not robust.

In the non-outage system, it is noted that $z(\mathbf{q}_v, \hat{\mathbf{H}}_v)$ is calculated when it is assumed that $\mathbf{q}_v$ is known. Therefore, on the contrary, a maximum quantity of bits that can be erroneous on the communication link may be calculated under a restriction that $z(\mathbf{q}_v, \hat{\mathbf{H}}_v)$ is given (for example, less than a given threshold $D^{max}$), that is, the following problem is solved:

$$q_v^* = \max_q q$$

$$\text{s.t. } q_{vu}' \leq q \qquad \forall u \in N(v)$$

$$z(\mathbf{q}_v', \hat{\mathbf{H}}_v) < D^{max}$$

The calculated $q_v^*$ is a maximum quantity of bits that can be transmitted incorrectly by the neighboring node of the target node v, that is, a maximum quantity of error bits. Therefore, a probability (robust probability) that a quantity of bits transmitted incorrectly by each neighboring node of the target node v is less than the maximum quantity $q_v^*$ of error bits is $p_v^{(r)} = P(q_{vu} \leq q_v^*, \forall u \in N(v)) = \prod_{u \in N(v)}[\sum_{i=0}^{q_v^*} \binom{p}{i} \epsilon_{vu}^i (1 - \epsilon_{vu})^{p-i}]$, where the BER is $\epsilon_{vu} = Q\left(\sqrt{\frac{2P_u h_{vu}}{\sigma_N^2}}\right)$. The maximum quantity of error bits is a greatest value in all possible first quantities $\mathbf{q}_v'$ of error bits, and the first quantity $\mathbf{q}_v'$ of bits that are allowed to be erroneous during transmission of at least one piece of third data over the communication link when the inference deviation $(z(\mathbf{q}_v', \hat{\mathbf{H}}_v))$ is less than a first maximum inference deviation D. The inference deviation is a quantity of different bits between a first inference result $\hat{c}_v$ obtained when the first distributed device performs inference based on the first data and the at least one piece of second data by using the graph neural network model and a second inference result $GNN(\tilde{\mathbf{H}}_v)$ obtained when the first distributed device performs inference based on the first data and at least one piece of fourth data by using the graph neural network model. The at least one piece of fourth data is data that is different from the at least one piece of second data and whose quantity of bits is less than or equal to the first quantity of error bits. The first maximum inference deviation D is a positive integer value less than or equal to the specified inference deviation $D^{max}$.

In this case, a requirement for the inference deviation $z\left(\mathbf{q}'_v, \hat{\mathbf{H}}_v\right)$ may be converted into a requirement for the robust probability $p_v^{(r)}$. To be specific, $p_v^{(r)}$ is required to be less than the target robust probability $p_v^{(t)}$, that is,

$$p_v^{(r)} < p_v^{(t)}.$$

Further, the BER may be required to be less than a target BER $\epsilon_v^*$, where the target BER $\epsilon_v^*$ may be obtained by solving $\sqrt[|N(v)|]{p_v^{(t)}} = \sum_{i=0}^{q_v^*} \binom{p}{i} (\epsilon_v^*)^i (1 - \epsilon_v^*)^{p-i}$. When a BER of the neighboring node of the target node v is greater than $\epsilon_v^*$, the inference is not robust.

Therefore, in the non-outage system, the following two methods can be used to determine whether the inference is robust.

(1) The robust probability $p_v^{(r)}$ is calculated based on the requirement $z\left(\mathbf{q}'_v, \hat{\mathbf{H}}_v\right) <$ D^max of the inference deviation, and is compared with the specified target robust probability $p_v^{(t)}$. When the target node v determines that the robust probability $p_v^{(r)}$ is less than the specified target robust probability $p_v^{(t)}$, the target node v determines that the inference result is not robust. The robust probability is a probability that a quantity of error bits during transmission of third data is less than the maximum quantity of error bits, and the maximum quantity of error bits is a maximum quantity of bits that are allowed to be incorrectly transmitted when a robustness requirement of the distributed learning system is met.

(2) A BER of transmission from each neighbor node to the target node is calculated, and is compared with the target BER $\epsilon_v^*$. When the target node v determines that the bit error rate of the neighboring node u is greater than the target BER, the target node v determines that the inference result is not robust. The target bit error rate is a maximum allowable bit error rate that meets the robustness requirement of the distributed learning system.

S603: The first distributed node determines at least one third distributed node on which an error occurs in transmission.

The first distributed node determines that the inference result is not robust, and further determines the at least one third distributed node on which an error occurs in transmission, where the at least one third distributed node belongs to the at least one second distributed node. The at least one third distributed node may be some or all of the second distributed nodes.

For example, when the first distributed node 101 determines that the robust probability is less than the specified target robust probability, the first distributed node 101 determines the at least one third distributed node on which a bit error rate of the at least one piece of first data is greater than the target bit error rate. The target bit error rate is a bit error rate that is capable of ensuring that a quantity of error bits during transmission of the at least one piece of first data over the communication link is less than or equal to the maximum quantity of error bits.

For example, when the first distributed node 101 determines that a bit error rate of the at least one third distributed node is greater than the target bit error rate, the first distributed node 101 determines the at least one third distributed node on which the bit error rate of the at least one piece of first data is greater than the target bit error rate.

For example, when the first distributed node 101 determines that a second maximum inference deviation is greater than the specified inference deviation, the first distributed node 101 determines the at least one third distributed node has an outage.

S604: The first distributed node sends a retransmission request to the at least one third distributed node, where the retransmission request is used to request the at least one third distributed node to retransmit the at least one piece of first data.

Correspondingly, the at least one third distributed node receives the retransmission request.

After determining the at least one third distributed node on which an error occurs in transmission, the first distributed node may request the at least one third distributed node to retransmit the at least one piece of first data.

For example, the at least one piece of retransmitted first data may be partially or completely the same as the at least one piece of first data in step S601.

S605: The at least one third distributed node retransmits the at least one piece of first data to the first distributed node.

Correspondingly, the first distributed node receives the at least one piece of retransmitted first data.

S606: The first distributed node performs inference again based on the second data, the at least one piece of first data, and the at least one piece of retransmitted first data by using the graph neural network model.

After receiving the at least one piece of first data, the first distributed node inputs the second data of the first distributed node, the at least one piece of previously received first data, and/or the at least one piece of retransmitted first data into the distributed learning model for inference again. Because the at least one third distributed node 102 on which an error occurs in transmission retransmits the at least one piece of first data, the distributed learning model based on the GNN is used to perform inference based on the second data, the at least one piece of previously received first data, and/or the at least one piece of retransmitted first data, to improve robustness of distributed inference.

Different from adjustment of a communication mechanism that is in a conventional wireless communication system and that aims at a system throughput, a packet loss rate, and a delay, in the method provided in this embodiment, robustness of distributed inference is used as a performance indicator, and is more applicable to a wireless communication system that bears a distributed learning task. In this method, the robustness of distributed inference is improved by using an efficient wireless transmission mechanism when wireless transmission errors are comprehensively considered.

According to a data retransmission method provided in an embodiment of this application, with an aim of robustness of a distributed inference result, an appropriate retransmission mechanism is formulated, so that a robust distributed inference result can be obtained with a small quantity of retransmissions.

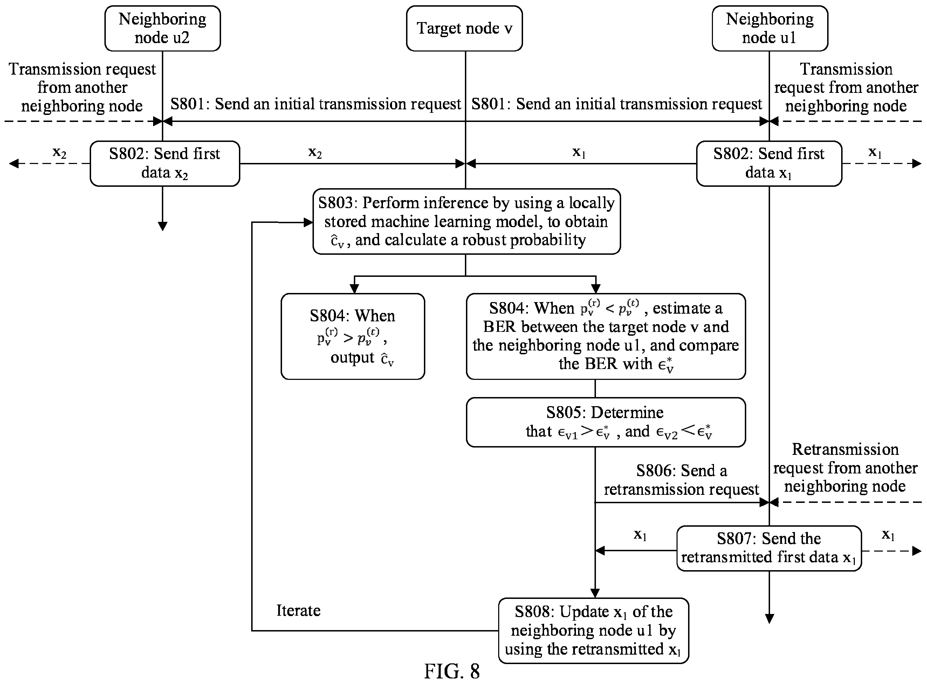

FIG. 8 is a schematic flowchart of another data retransmission method according to an embodiment of this application. The method is applied to a non-outage system. The method may include the following steps.

S801: A target node v sends an initial transmission request to a neighboring node u1 and a neighboring node u2.

This embodiment is described by using an example in which the target node v has two neighboring nodes (the neighboring node u1 and the neighboring node u2). Actually, the neighboring node of the target node v may have one or more neighboring nodes.

Correspondingly, the neighboring node u1 receives the initial transmission request of the target node v. In addition, the neighboring node u1 may further receive a transmission request of another neighboring node. Similarly, the neighboring node u2 receives the initial transmission request of the target node v. In addition, the neighboring node u2 may further receive a transmission request of another neighboring node.

S802: The neighboring node u1 sends first data $x_1$ to the target node v, and the neighboring node u2 sends first data $x_2$ to the target node v.

In this embodiment, an example in which the neighboring node u1 sends the first data $x_1$ is used. Because the neighboring node u1 receives the transmission requests of the target node v and another neighboring node, the neighboring node u1 may broadcast the first data $x_1$. In another embodiment, if the neighboring node u1 receives only the transmission request of the target node v, the neighboring node u1 may unicast the first data $x_1$ to the target node v. In another embodiment, if the neighboring node u1 receives the transmission requests of the target node v and another neighboring node, the neighboring node u1 may separately send the first data $x_1$ to the target node v and the another neighboring node.

S803: After receiving the first data $x_1$ sent by the neighboring node u1 and the first data $x_2$ sent by the neighboring node u2, the target node v performs inference by using a locally stored machine learning model, to obtain a first inference result ($\hat{c}_v$), and calculates a robust probability $p_v^{(r)}$.

For inference and calculation processes, refer to step S602 in the foregoing embodiment.

S804: When the robust probability $p_v^{(r)}$ is greater than a specified target robust probability $p_r^{(t)}$, the target node v outputs the first inference result ($\hat{c}_v$), and subsequent retransmission or update operations are not performed in a current inference process; or when the robust probability $p_v^{(r)}$ is less than the specified target robust probability $p_r^{(t)}$, the target node v estimates a BER between the target node v and the neighboring node u1, and compares the BER with a target BER $\epsilon_v^*$.

For a process of calculating the target BER $\epsilon_v^*$, refer to step S602 in the foregoing embodiment.

In another embodiment, alternatively, when the robust probability $p_v^{(r)}$ is greater than or equal to the specified target robust probability $p_v^{(t)}$, the target node v outputs the first inference result ($\hat{c}_v$), and subsequent retransmission and update operations are not performed in a current inference process; or when the robust probability $p_v^{(r)}$ is less than or equal to the specified target robust probability $p_v^{(t)}$, the target node v calculates the target bit error rate BER $\epsilon_v^*$.

S805: The target node v determines a bit error rate $\epsilon_{v1} > \epsilon_v^*$ of the neighboring node u1 and a bit error rate $\epsilon_{v2} < \epsilon_v^*$ of the neighboring node u2.

S806: The target node v sends a retransmission request to the neighboring node u1.

When the neighboring node u1 needs to be indicated to perform retransmission, the target node v sends the retransmission request to the neighboring node u1. The retransmission request indicates that an inference result is not robust, and the retransmission request may further include a transmission resource used for next data transmission. In this case, the neighboring node u1 retransmits the first data to the target node v on the transmission resource indicated by the retransmission request.

The retransmission request may be carried on a physical learning control channel (physical learning control channel, PLCCH) for sending.

The neighboring node u1 receives the retransmission request of the target node v.

In addition, there may be a plurality of target nodes that synchronously performs inference in the system. Therefore, the neighboring node u1 may receive retransmission requests from a plurality of neighboring nodes.

S807: The neighboring node u1 retransmits the first data $x_1$ to the target node v.

If the neighboring node u1 receives the retransmission requests of the plurality of neighboring nodes, and the neighboring node u1 needs to transmit the same first data to different target nodes, the neighboring node u1 may transmit the first data $x_1$ of the neighboring node u1 to the neighboring nodes of the neighboring node u1 in a broadcast (or multicast) manner. The neighboring node u1 may alternatively transmit the first data $x_1$ of the neighboring node u1 to the neighboring nodes of the neighboring node u1 in a unicast manner.

If the neighboring node u1 receives a retransmission request of only one target node, the neighboring node u1 may transmit the first data $x_1$ of the neighboring node u1 to the target node in the unicast manner.

S808: The target node v updates the first data of the neighboring node u1 by using the received retransmitted first data $x_1$.

After receiving all the first data that needs to be retransmitted, the target node v may combine the first data that is transmitted a plurality of times from a same neighboring node by using, for example, maximal-ratio combining (maximal-ratio combining, MRC), to obtain an equivalent signal, and re-estimate a BER of the neighboring node.

The target node v performs inference again based on second data of the target node v and at least one piece of updated first data by using the locally stored machine learning model, to obtain a new inference label, and calculates a robust probability of the result. The foregoing process is repeated until the target robust probability is achieved.

In the retransmission mechanism provided in this embodiment, with an aim of robustness of a distributed inference result, appropriate retransmission and stop mechanisms are formulated, so that a quasi-robust distributed inference result can be obtained with a small quantity of retransmissions. In an existing retransmission mechanism, reliability is used as a retransmission determining criterion, and retransmission is stopped only after all neighbor signals are correctly transmitted. Distributed learning is tolerant to a transmission error to some extent. Therefore, in this embodiment, a new retransmission determining criterion and a new stop mechanism are formulated. This avoids a waste of communication resources, and reduces a delay for implementing robust inference.

According to a data retransmission method provided in an embodiment of this application, whether a distributed inference result is robust is determined, and a neighboring node having a wireless transmission error retransmits the first data, thereby improving robustness of distributed inference.

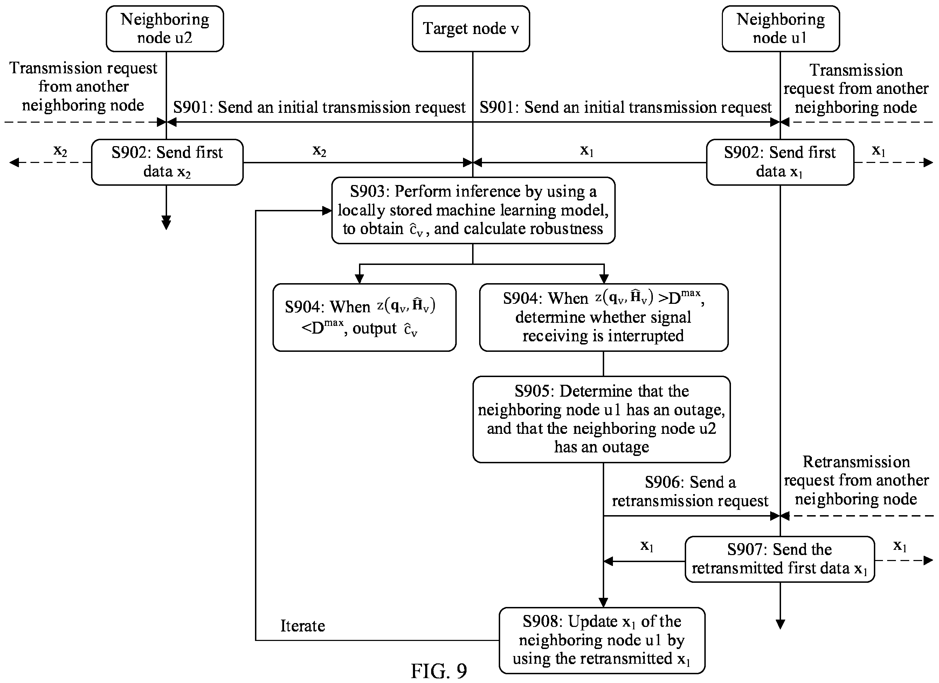

FIG. 9 is a schematic flowchart of another data retransmission method according to an embodiment of this application. The method is applied to an outage system. The method may include the following steps:

S901: A target node v sends an initial transmission request to a neighboring node u1 and a neighboring node u2.

For specific implementation of this step, refer to step S801 in the foregoing embodiment.

S902: The neighboring node u1 sends first data $x_1$ to the target node v, and the neighboring node u2 sends first data $x_2$ to the target node v.

For specific implementation of this step, refer to step S802 in the foregoing embodiment.

S903: After receiving the first data $x_1$ sent by the neighboring node u1 and the first data $x_2$ sent by the neighboring node u2, the target node v performs inference by using a locally stored machine learning model, to obtain a first inference

result ($\hat{c}_v$), and calculates robustness.

For inference and calculation processes, refer to step S602 in the foregoing embodiment.

S904: When $z(\mathbf{q}_v, \hat{\mathbf{H}}_v)$ is less than a specified inference deviation $D^{max}$, the target node v outputs a first inference result ($\hat{c}_v$), and subsequent retransmission or update operations are not performed in a current inference process; or when $z(\mathbf{q}_v, \hat{\mathbf{H}}_v)$ is greater than the specified inference deviation $D^{max}$, the target node v determines whether signal receiving is interrupted.

S905: The target node v determines that an outage occurs on the neighboring node u1, and that no outage occurs on the neighboring node u2.

S906: The target node v sends a retransmission request to the neighboring node u1.

When the neighboring node u1 needs to be indicated to perform retransmission, the target node v sends the retransmission request to the neighboring node u1. The retransmission request indicates that an inference result is not robust, and the retransmission request may further include a transmission resource used for next data transmission. In this case, the neighboring node u1 retransmits the first data to the target node v on the transmission resource indicated by the retransmission request.

The retransmission request may be carried on a PLCCH for sending.

The neighboring node u1 receives the retransmission request of the target node v.

In addition, there may be a plurality of target nodes that synchronously performs label inference in the system. Therefore, the neighboring node u1 may receive retransmission requests from a plurality of neighboring nodes.

S907: The neighboring node u1 retransmits the first data $x_1$ to the target node v.

If the neighboring node u1 receives the retransmission requests of the plurality of neighboring nodes, and the neighboring node u1 needs to transmit the same first data to different target nodes, the neighboring node u1 may transmit the first data $x_1$ of the neighboring node u1 to the neighboring nodes of the neighboring node u1 in a broadcast (or multicast) manner. The neighboring node u1 may alternatively transmit the first data $x_1$ of the neighboring node u1 to the neighboring nodes of the neighboring node u1 in a unicast manner.

If the neighboring node u1 receives a retransmission request of only one target node, the neighboring node u1 may transmit the first data $x_1$ of the neighboring node u1 to the target node in the unicast manner.

S908: The target node v updates the first data of the neighboring node u1 by using the received retransmitted first data $x_1$.

After receiving all the first data that needs to be retransmitted, the target node v may combine the first data that is transmitted a plurality of times from a same neighboring node, to obtain an equivalent signal, and re-estimate a BER of the neighboring node.

The target node v performs inference again based on second data of the target node v and at least one piece of updated first data by using the locally stored machine learning model, to obtain a new inference label, and calculates robustness of the result. The foregoing process is repeated until a robust inference result is achieved, that is, $z(\mathbf{q}_v, \hat{\mathbf{H}}_v)$ is less than the specified inference deviation $D^{max}$.

In the retransmission mechanism provided in this embodiment, with an aim of robustness of a distributed inference result, appropriate retransmission and stop mechanisms are formulated, so that a quasi-robust distributed inference result can be obtained with a small quantity of retransmissions. In an existing retransmission mechanism, reliability is used as a retransmission determining criterion, and retransmission is stopped only after all neighbor signals are correctly transmitted. Distributed learning is tolerant to a transmission error to some extent. Therefore, in this embodiment, a new retransmission determining criterion and a new stop mechanism are formulated. This avoids a waste of communication resources, and reduces a delay for implementing robust inference.

According to a data retransmission method provided in an embodiment of this application, whether a distributed inference result is robust is determined, and a neighboring node having a wireless transmission error retransmits the first data, thereby improving robustness of distributed inference.

In this application, simulation verification is further performed on the foregoing beneficial effects. The following simulation scenario is considered: N terminal devices are randomly distributed in a square area with a side length of 2000 m, and if a distance between two terminals is less than 500 m, the two terminals may exchange information. A transmission loss model is 128.1+37.6log(d), where d is a distance between terminal devices, and a unit of the distance is kilometer. Small-scale fading is set to Rayleigh (Rayleigh) distribution with uniform variance, and bandwidth is 10 MHz. Distributed learning is performed by using a distributed learning system based on a GNN, and each terminal device corresponds to a binary tag, {-1, 1}, that is, pays attention to a binary classification problem in a network. Both a feature dimension of each terminal device and an output vector dimension of the distributed learning system are set to 32, and both are generated according to Gaussian distribution.

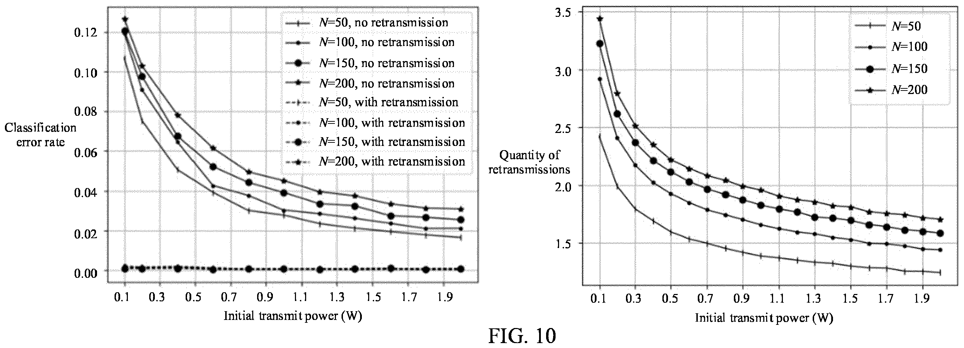

FIG. 10 shows performance of a retransmission mechanism provided in this application in a non-outage communication system when a target robust probability $p_v^{(t)} = 80\%$. The left figure shows a classification error rate when there is retransmission control and no retransmission control in the non-outage communication system. The classification error rate is close to 0% when there is retransmission control. The right figure shows a quantity of retransmissions required when robustness is achieved in the non-outage communication system. It can be learned that in this application, an error rate of an inference result can be effectively reduced (from about 12% to about 0%) through a small quantity of retransmissions (as shown in the right figure, up to three times), and a robust distributed inference result can be efficiently obtained, thereby avoiding a waste of communication resources and reducing a system latency.

It may be understood that, to implement functions in the foregoing embodiments, the first distributed node and the second distributed node include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

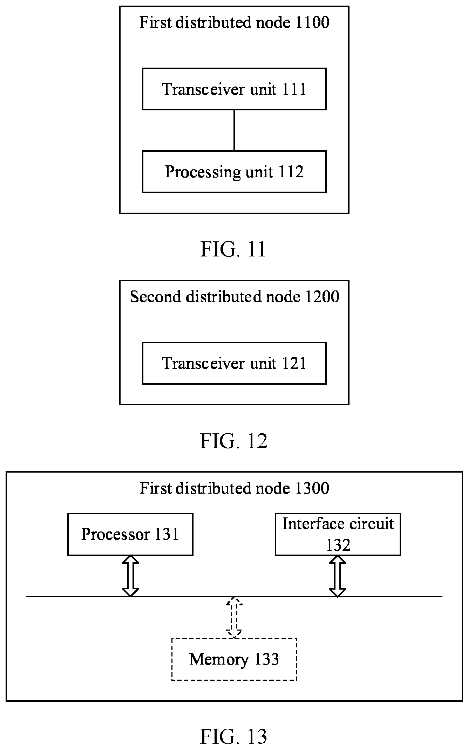

FIG. 11 is a schematic diagram of a structure of a possible first distributed node according to an embodiment of this application. The first distributed node may be configured to implement a function of the first distributed node in the foregoing method embodiment, and therefore can also implement beneficial effects of the foregoing method embodiment. In an embodiment of this application, the first distributed node may be the first distributed node 101 shown in FIG. 1, or may be a module (for example, a chip) used in the first distributed node.

As shown in FIG. 11, the first distributed node 1100 includes a transceiver unit 111 and a processing unit 112. The first distributed node 1100 is configured to implement functions of the first distributed node in the method embodiments shown in FIG. 6 to FIG. 9.

The transceiver unit 111 is configured to receive at least one piece of first data of at least one second distributed node adjacent to the first distributed node. The processing unit 112 is configured to perform inference based on second data of the first distributed node and the at least one piece of first data by using a graph neural network model, and determine that an inference result is not robust. The processing unit 112 is further configured to determine at least one third distributed node on which an error occurs in transmission, where the at least one third distributed node belongs to the at least one second distributed node. The transceiver unit 111 is further configured to send a retransmission request to the third distributed node, where the retransmission request is used to request the third distributed node to retransmit the at least one piece of first data. The processing unit 112 is further configured to perform inference again based on the second data, the at least one piece of first data, and the at least one piece of retransmitted first data by using the graph neural network model.

Optionally, the processing unit 112 is further configured to determine that a robust probability is less than a specified target robust probability, where the robust probability is a probability that each quantity of error bits during transmission of the at least one piece of first data is less than a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. The processing unit 112 is further configured to determine the at least one third distributed node on which a bit error rate of the at least one piece of first data is greater than a target bit error rate, where the target bit error rate is a bit error rate that is capable of ensuring that a quantity of error bits is less than or equal to the maximum quantity of error bits during transmission of the at least one piece of first data over the communication link.

Optionally, the processing unit 112 is further configured to determine that a bit error rate of the at least one third distributed node is greater than a target bit error rate, where the target bit error rate is a bit error rate that is capable of ensuring that a quantity of error bits during transmission of the at least one piece of first data over the communication link is less than or equal to a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation. The processing unit 112 is further configured to determine the at least one third distributed node on which a bit error rate of the at least one piece of first data is greater than the target bit error rate.

Optionally, the processing unit 112 is further configured to determine that a second maximum inference deviation is greater than a specified inference deviation, where the second maximum inference deviation is a largest value in all possible inference deviations, the inference deviation is a quantity of different bits between a first inference result obtained when the first distributed node performs inference based on the first data and the at least one piece of first data by using the graph neural network model and a third inference result obtained when the first distributed node performs inference based on the first data and at least one piece of fourth data by using the graph neural network model, and the at least one piece of fourth data is data whose dimension is the same as that of the at least one piece of first data and whose element values are all opposite to the at least one piece of first data. The processing unit 112 is further configured to determine the at least one third distributed node has an outage.

For more detailed descriptions of the transceiver unit 111 and the processing unit 112, directly refer to related descriptions in the method embodiments shown in FIG. 6 to FIG. 9. Details are not described herein again.

FIG. 12 is a schematic diagram of a structure of a possible second distributed node according to an embodiment of this application. The second distributed node may be configured to implement a function of the second distributed node in the foregoing method embodiment, and therefore can also implement beneficial effects of the foregoing method embodiment. In an embodiment of this application, the second distributed node may be one of the second distributed nodes 102 shown in FIG. 1, or may be a module (for example, a chip) used in the second distributed node.

As shown in FIG. 12, the second distributed node 1200 includes a transceiver unit 121. The second distributed node 1200 is configured to implement functions of the second distributed node in the method embodiments shown in FIG. 6 to FIG. 9.

The transceiver unit 121 is configured to send first data to the first distributed node. The transceiver unit 121 is further configured to receive a retransmission request of the first distributed node when an inference result of the first distributed node is not robust because an error occurs in transmission performed by any second distributed node, where the retransmission request is used to request the any second distributed node to retransmit the first data. The transceiver unit 111 is further configured to retransmit the first data to the first distributed node.

For more detailed descriptions of the transceiver unit 121, directly refer to related descriptions in the method embodiments shown in FIG. 6 to FIG. 9. Details are not described herein again.

FIG. 13 is a schematic diagram of a structure of another first distributed node according to an embodiment of this application. The first distributed node 1300 includes a processor 131 and an interface circuit 132. The processor 131 and the interface circuit 132 are coupled to each other. It can be understood that the interface circuit 132 may be a transceiver or an input/output interface. Optionally, the first distributed node 1300 may further include a memory 133, configured to store instructions executed by the processor 131, or store input data for the processor 131 to run instructions, or store data generated after the processor 131 runs instructions.

When the first distributed node 1300 is configured to implement the methods shown in FIG. 6 to FIG. 9, the processor 131 is configured to implement a function of the processing unit 112, and the interface circuit 132 is configured to implement a function of the transceiver unit 111.

When the first distributed node is a chip used in the first distributed node, the chip implements a function of the first distributed node in the foregoing method embodiment. The chip receives information from another module (for example, a radio frequency module or an antenna) in the first distributed node, where the information is sent by the second distributed node to the first distributed node; or the chip in the first distributed node sends information to another module (for example, a radio frequency module or an antenna) in the first distributed node, where the information is sent by the first distributed node to the second distributed node.

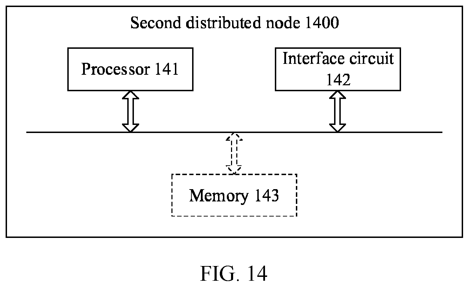

FIG. 14 is a schematic diagram of a structure of another second distributed node according to an embodiment of this application. The second distributed node 1400 includes a processor 141 and an interface circuit 142. The processor 141 and the interface circuit 142 are coupled to each other. It can be understood that the interface circuit 142 may be a transceiver or an input/output interface. Optionally, the second distributed node 1400 may further include a memory 143, configured to store instructions executed by the processor 141, or store input data for the processor 141 to run instructions, or store data generated after the processor 141 runs instructions.

When the second distributed node 1400 is configured to implement the methods shown in FIG. 6 to FIG. 9, the interface circuit 142 is configured to implement a function of the transceiver unit 121.

When the second distributed node is a chip used in the second distributed node, the chip implements a function of the second distributed node in the foregoing method embodiment. The chip receives information from another module (for example, a radio frequency module or an antenna) in the second distributed node, where the information is sent by the first distributed node to the second distributed node; or the chip in the second distributed node sends information to another module (for example, a radio frequency module or an antenna) in the second distributed node, where the information is sent by the second distributed node to the first distributed node.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another logic circuit, a programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instruction may be composed of corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact optical disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first distributed node or the second distributed node. Certainly, the processor and the storage medium may alternatively exist in the first distributed node or the second distributed node as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a first distributed node, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application further provides a distributed learning system. The distributed learning system includes at least two distributed nodes, and the at least two distributed nodes include the first distributed node and the at least one second distributed node adjacent to the first distributed node.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. The term "and/or" describes an association relationship between associated objects and may indicate that three relationships may exist. For example, A and/or B may indicate the following cases: Only A exists, both A and B exist, and only B exists. A and B may be singular or plural. In the text descriptions of this application, the character "/" generally indicates an "or" relationship between the associated objects. In a formula in this application, the character "/" indicates a "division" relationship between the associated objects. In this application, "first" and "second" are merely examples, and there may be one or more "first" and "second". "First" and "second" are only used to distinguish between objects of a same type. A first object and a second object may be a same object, or may be different objects.

It should be noted that the terms "system" and "network" in embodiments of this application may be used interchangeably. "A plurality of" means two or more. In view of this, "a plurality of" may also be understood as "at least two" in embodiments of this application. The term "and/or" describes an association relationship for describing associated objects and indicates that three relationships may exist. For example, A and/or B may indicate the following three cases: Only A exists, both A and B exist, and only B exists. In addition, the character "/" generally indicates an "or" relationship between the associated objects.

It may be understood that numerical symbols involved in embodiments of this application are differentiated merely for ease of description, but are not used to limit the scope of embodiments of this application. The sequence numbers of the foregoing processes do not mean execution sequences, and the execution sequences of the processes should be determined based on functions and internal logic of the processes.

**Claims**

1. A data retransmission method, applied to a distributed learning system based on a graph neural network, wherein the distributed learning system comprises at least two distributed nodes, the at least two distributed nodes comprise a first distributed node and at least one second distributed node, and the method comprises:

   receiving, by the first distributed node, at least one piece of first data of the at least one second distributed node adjacent to the first distributed node;

   performing, by the first distributed node, inference based on second data of the first distributed node and the at least one piece of first data by using a graph neural network model, and determining that an inference result is not robust;

   determining, by the first distributed node, at least one third distributed node on which an error occurs in transmission, wherein the at least one third distributed node belongs to the at least one second distributed node;

   sending, by the first distributed node, a retransmission request to the third distributed node, wherein the retransmission request is used to request the third distributed node to retransmit the at least one piece of first data; and

   performing, by the first distributed node, inference again based on the second data, the at least one piece of first data, and the at least one piece of retransmitted first data by using the graph neural network model.

2. The method according to claim 1, wherein the performing, by the first distributed node, inference based on second data of the first distributed node and the at least one piece of first data by using a graph neural network model, and determining that an inference result is not robust comprises:

   determining, by the first distributed node, that a robust probability is less than a specified target robust probability, wherein the robust probability is a probability that each quantity of error bits during transmission of the at least one piece of first data is less than a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation; and

   the determining, by the first distributed node, at least one third distributed node on which an error occurs in transmission comprises:

   determining, by the first distributed node, the at least one third distributed node on which a bit error rate of the at least one piece of first data is greater than a target bit error rate, wherein the target bit error rate is a bit error rate that is capable of ensuring that a quantity of error bits during transmission of the at least one piece of first data over the communication link is less than or equal to the maximum quantity of error bits.

3. The method according to claim 1, wherein the performing, by the first distributed node, inference based on second data of the first distributed node and the at least one piece of first data by using a graph neural network model, and determining that an inference result is not robust comprises:

   determining, by the first distributed node, that a bit error rate of the at least one third distributed node is greater than a target bit error rate, wherein the target bit error rate is a bit error rate that is capable of ensuring that a quantity of error bits during transmission of the at least one piece of first data over the communication link is less than or equal to a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation; and

the determining, by the first distributed node, at least one third distributed node on which an error occurs in transmission comprises:

determining, by the first distributed node, the at least one third distributed node on which a bit error rate of the at least one piece of first data is greater than the target bit error rate.

4. The method according to claim 1, wherein the performing, by the first distributed node, inference based on second data of the first distributed node and the at least one piece of first data by using a graph neural network model, and determining that an inference result is not robust comprises:

determining, by the first distributed node, that a second maximum inference deviation is greater than a specified inference deviation, wherein the second maximum inference deviation is a largest value in all possible inference deviations, the inference deviation is a quantity of different bits between a first inference result obtained when the first distributed node performs inference based on the first data and the at least one piece of first data by using the graph neural network model and a third inference result obtained when the first distributed node performs inference based on the first data and at least one piece of fourth data by using the graph neural network model, and the at least one piece of fourth data is data whose dimension is the same as that of the at least one piece of first data and whose element values are all opposite to the at least one piece of first data; and

the determining, by the first distributed node, at least one third distributed node on which an error occurs in transmission comprises:

determining, by the first distributed node, the at least one third distributed node has an outage.

5. A data retransmission method, applied to a distributed learning system based on a graph neural network, wherein the distributed learning system comprises at least two distributed nodes, the at least two distributed nodes comprise a first distributed node and at least one second distributed node, and the method comprises:

sending, by any second distributed node in the at least one second distributed node, first data to the first distributed node;

receiving, by the any second distributed node, a retransmission request of the first distributed node when an inference result of the first distributed node is not robust because an error occurs in transmission performed by the any second distributed node, wherein the retransmission request is used to request the any second distributed node to retransmit the first data; and

retransmitting, by the any second distributed node, the first data to the first distributed node.

6. A first distributed node, used in a distributed learning system based on a graph neural network, wherein the distributed learning system comprises at least two distributed nodes, the at least two distributed nodes comprise the first distributed node and at least one second distributed node, and the first distributed node comprises:

a transceiver unit, configured to receive at least one piece of first data of the at least one second distributed node adjacent to the first distributed node; and

a processing unit, configured to perform inference based on second data of the first distributed node and the at least one piece of first data by using a graph neural network model, and determine that an inference result is not robust, wherein

the processing unit is further configured to determine at least one third distributed node on which an error occurs in transmission, wherein the at least one third distributed node belongs to the at least one second distributed node;

the transceiver unit is further configured to send a retransmission request to the at least one third distributed node, wherein the retransmission request is used to request the at least one third distributed node to retransmit the at least one piece of first data; and

the processing unit is further configured to perform inference again based on the second data, the at least one piece of first data, and the at least one piece of retransmitted first data by using the graph neural network model.

7. The first distributed node according to claim 6, wherein the processing unit is configured to determine that a robust probability is less than a specified target robust probability, wherein the robust probability is a probability that each quantity of error bits during transmission of the at least one piece of first data is less than a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation; and

the processing unit is further configured to determine the at least one third distributed node on which a bit error rate of the at least one piece of first data is greater than a target bit error rate, wherein the target bit error rate is a bit error rate that is capable of ensuring that a quantity of error bits during transmission of the at least one piece of first data over the communication link is less than or equal to the maximum quantity of error bits.

8. The first distributed node according to claim 6, wherein the processing unit is configured to determine that a bit error rate of the at least one third distributed node is greater than a target bit error rate, wherein the target bit error rate is a bit error rate that is capable of ensuring that a quantity of error bits during transmission of the at least one piece of first data over the communication link is less than or equal to a maximum quantity of error bits, the maximum quantity of error bits is a greatest value in all possible first quantities of error bits, the first quantity of error bits is a maximum quantity of bits that are allowed to be erroneous during transmission of the at least one piece of first data over a communication link when an inference deviation is less than a first maximum inference deviation, the inference deviation is a quantity of different bits between a first inference result obtained when the first distributed node performs inference based on the first data and the at least one piece of first data by using the graph neural network model and a second inference result obtained when the first distributed node performs inference based on the first data and at least one piece of third data by using the graph neural network model, the at least one piece of third data is data that is different from the at least one piece of first data and whose quantity of bits is less than or equal to the first quantity of error bits, and the first maximum inference deviation is a positive integer value less than or equal to a specified inference deviation; and

the processing unit is further configured to determine the at least one third distributed node on which a bit error rate of the at least one piece of first data is greater than the target bit error rate.

9. The first distributed node according to claim 6, wherein the processing unit is configured to determine that a second maximum inference deviation is greater than a specified inference deviation, wherein the second maximum inference deviation is a largest value in all possible inference deviations, the inference deviation is a quantity of different bits between a first inference result obtained when the first distributed node performs inference based on the first data and the at least one piece of first data by using the graph neural network model and a third inference result obtained when the first distributed node performs inference based on the first data and at least one piece of fourth data by using the graph neural network model, and the at least one piece of fourth data is data whose dimension is the same as that of the at least one piece of first data and whose element values are all opposite to the at least one piece of first data; and

the processing unit is further configured to determine the at least one third distributed node has an outage.

10. A second distributed node, used in a distributed learning system based on a graph neural network, wherein the distributed learning system comprises at least two distributed nodes, the at least two distributed nodes comprise a first distributed node and at least one second distributed node, and the second distributed node comprises:

a transceiver unit, configured to send first data to the first distributed node, wherein
the transceiver unit is further configured to receive a retransmission request of the first distributed node when an inference result of the first distributed node is not robust because an error occurs in transmission, wherein the retransmission request is used to request the second distributed node to retransmit the first data; and
the transceiver unit is further configured to retransmit the first data to the first distributed node.

11. A first distributed node, comprising a processor, wherein the processor is coupled to a memory, and the processor is configured to read instructions in the memory, to implement the method according to any one of claims 1 to 4.

12. A second distributed node, comprising a processor, wherein the processor is coupled to a memory, and the processor is configured to read instructions in the memory, to implement the method according to claim 5.

13. A distributed learning system, wherein the distributed learning system comprises at least two distributed nodes, and the at least two distributed nodes comprise the first distributed node according to any one of claims 6 to 9 and at least one of the second distributed nodes according to claim 10.

14. A computer-readable storage medium, storing a computer program, wherein when the program is executed by a processor, the method according to any one of claims 1 to 4 or the method according to claim 5 is implemented.

15. A computer program product, configured to: when the computer program product is executed on a computing device, perform the method according to any one of claims 1 to 4 and the method according to claim 5.

FIG. 1

FIG. 2

FIG. 3

FIG. 4

Sender          Receiver

Packet

Packet — Fail to receive correctly

NACK

Packet

Packet — Receive correctly

ACK

Transmission completed

Timeline

FIG. 5

| First distributed node 101 | | At least one second distributed node 102 |
|---|---|---|

S601: At least one piece of first data

S602: When performing inference based on second data of the first distributed node and the at least one piece of first data by using a graph neural network model, determine that an inference result is not robust

S603: Determine at least one third distributed node on which an error occurs in transmission

S604: Retransmission request

S605: Retransmit the at least one piece of first data

S606: Perform inference again based on the second data, the at least one piece of first data, and the at least one piece of retransmitted first data by using the graph neural network model

FIG. 6

Perform linear fitting or convex hull fitting on a nonlinear activation function in a machine learning model
— S701

Relax a binary optimization variable to a continuous variable between 0 and 1
— S702

Determine a type of an optimization problem, and solve the problem according to a corresponding common algorithm
— S703

Obtain a suboptimal solution or an optimal solution
— S704

FIG. 7

```
┌─────────────┐              ┌──────────┐                ┌─────────────┐
│ Neighboring │              │ Target   │                │ Neighboring │
│  node u2    │              │ node v   │                │  node u1    │
└─────────────┘              └──────────┘                └─────────────┘
```

Transmission request
from another
neighboring node

S801: Send an initial transmission request | S801: Send an initial transmission request

Transmission
request from another
neighboring node

$x_2$ ← ─ ─

┌──────────────────┐
│ S802: Send first │  $x_2$ ──────→  $x_1$  ←──────
│    data $x_2$    │
└──────────────────┘

┌──────────────────┐
│ S802: Send first │  $x_1$ ─ ─ →
│    data $x_1$    │
└──────────────────┘

┌─────────────────────────────────────────┐
│ S803: Perform inference by using a locally │
│ stored machine learning model, to obtain  │
│ $\hat{c}_v$, and calculate a robust probability │
└─────────────────────────────────────────┘

┌──────────────────┐          ┌─────────────────────────────────────┐
│ S804: When       │          │ S804: When $p_v^{(r)} < p_v^{(t)}$, estimate a │
│ $p_v^{(r)} > p_v^{(t)}$,    │          │ BER between the target node v and   │
│ output $\hat{c}_v$ │          │ the neighboring node u1, and compare │
└──────────────────┘          │ the BER with $\epsilon_v^*$         │
                              └─────────────────────────────────────┘

┌──────────────────────────────────┐
│ S805: Determine                  │
│ that $\epsilon_{v1} > \epsilon_v^*$, and $\epsilon_{v2} < \epsilon_v^*$ │
└──────────────────────────────────┘

Retransmission
request from another
neighboring node

S806: Send a
retransmission request

$x_1$  ←──────

┌──────────────────────────────┐
│ S807: Send the               │  $x_1$ ─ ─ →
│ retransmitted first data $x_1$ │
└──────────────────────────────┘

Iterate

┌──────────────────────────────┐
│ S808: Update $x_1$ of the    │
│ neighboring node u1 by       │
│ using the retransmitted $x_1$ │
└──────────────────────────────┘

FIG. 8

FIG. 9

Neighboring node u2 — Target node v — Neighboring node u1

Transmission request from another neighboring node

S901: Send an initial transmission request | S901: Send an initial transmission request

Transmission request from another neighboring node

$x_2$ | S902: Send first data $x_2$ | $x_2$ | $x_1$ | S902: Send first data $x_1$ | $x_1$

S903: Perform inference by using a locally stored machine learning model, to obtain $\hat{c}_v$, and calculate robustness

S904: When $z(\mathbf{q}_v, \hat{\mathbf{H}}_v) < D^{max}$, output $\hat{c}_v$

S904: When $z(\mathbf{q}_v, \hat{\mathbf{H}}_v) > D^{max}$, determine whether signal receiving is interrupted

S905: Determine that the neighboring node u1 has an outage, and that the neighboring node u2 has an outage

S906: Send a retransmission request

Retransmission request from another neighboring node

$x_1$ | S907: Send the retransmitted first data $x_1$ | $x_1$

Iterate

S908: Update $x_1$ of the neighboring node u1 by using the retransmitted $x_1$

EP 4 414 889 A1

FIG. 10

First distributed node 1100

Transceiver unit 111

Processing unit 112

FIG. 11

Second distributed node 1200

Transceiver unit 121

FIG. 12

First distributed node 1300

Processor 131

Interface circuit 132

Memory 133

FIG. 13

Second distributed node 1400

Processor 141

Interface circuit 142

Memory 143

FIG. 14

## INTERNATIONAL SEARCH REPORT

| International application No. |
|---|
| **PCT/CN2022/124889** |

### A. CLASSIFICATION OF SUBJECT MATTER

G06N 3/02(2006.01)i; G06N 3/08(2006.01)i; H04W 28/04(2009.01)i

According to International Patent Classification (IPC) or to both national classification and IPC

### B. FIELDS SEARCHED

Minimum documentation searched (classification system followed by classification symbols)

G06N; H04L; H04W

Documentation searched other than minimum documentation to the extent that such documents are included in the fields searched

Electronic data base consulted during the international search (name of data base and, where practicable, search terms used)

CNPAT, WPI, EPODOC, IEEE, CNKI: 图神经网络, GNN, graph neural network, 非欧式, 数据, 不, 鲁棒, 稳健, 强健, 稳定, robust, 传输, 发送, 接收, 收发, 错误, 误码, 误比特, error, BER, 重传, 重发, 重新发送, 重新传输, retransmit, retransmission, 分布式, 去中心, 否定应答, 否定确认, NACK

### C. DOCUMENTS CONSIDERED TO BE RELEVANT

| Category* | Citation of document, with indication, where appropriate, of the relevant passages | Relevant to claim No. |
|---|---|---|
| PX | LEE, M. Y. et al. "Decentralized Inference with Graph Neural Networks in Wireless Communication Systems" *IEEE Transactions on Mobile Computing*, 08 November 2021 (2021-11-08), sections 2-6 | 1-15 |
| X | US 2005249244 A1 (KABUSHIKI KAISHA TOSHIBA) 10 November 2005 (2005-11-10) description, paragraphs [0033]-[0035], [0059]-[0070], and [0075] | 5, 10, 12, 14-15 |
| A | CN 113255714 A (BEIJING SAMSUNG TELECOM R&D CENTER et al.) 13 August 2021 (2021-08-13) entire document | 1-15 |
| A | CN 112468487 A (TSINGHUA UNIVERSITY) 09 March 2021 (2021-03-09) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 December 2022** | **16 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/124889**

| Patent document cited in search report | | | Publication date (day/month/year) | Patent family member(s) | | | Publication date (day/month/year) |
|---|---|---|---|---|---|---|---|
| US | 2005249244 | A1 | 10 November 2005 | JP | 2005260939 | A | 22 September 2005 |
| | | | | GB | 2412038 | A | 14 September 2005 |
| CN | 113255714 | A | 13 August 2021 | KR | 20210102039 | A | 19 August 2021 |
| | | | | US | 2021248181 | A1 | 12 August 2021 |
| | | | | WO | 2021162481 | A1 | 19 August 2021 |
| CN | 112468487 | A | 09 March 2021 | | None | | |

Form PCT/ISA/210 (patent family annex) (January 2015)

**REFERENCES CITED IN THE DESCRIPTION**

**Patent documents cited in the description**

- CN 202111228413